# EUROPEAN PATENT SPECIFICATION

(11) **EP 0 513 086 B1**
(45) Date of publication and mention of the grant of the patent: **08.11.1995**
(21) Application number: 91903156.7
(22) Date of filing: 04.12.1990
(51) Int. Cl.: G01N 30/30, G01N 30/16, B01D 15/08

(54) **GAS CHROMATOGRAPHY METHOD AND APPARATUS**
GASCHROMATOGRAPHIEVERFAHREN UND -VORRICHTUNG
PROCEDE ET DISPOSITIF DE CHROMATOGRAPHIE EN PHASE GAZEUSE

(43) Date of publication of application: 19.11.1992
(73) Proprietor: THE DOW CHEMICAL COMPANY, Midland, Michigan 48640 (US)
(72) Inventor: HILLER, Joseph, F., Midland, MI 48640 (US); McCABE, Terrence, Midland, MI 48640 (US); MORABITO, Paul, L., Midland, MI 48640 (US)
(74) Representative: Peuscet, Jacques
(86) International application number: US9007107
(87) International publication number: WO9210748

(56) References cited:
- EP-A- 0 051 778
- US-A- 3 181 344
- US-A- 3 225 520
- US-A- 3 225 521
- US-A- 4 004 881
- US-A- 4 057 998
- US-A- 4 367 645
- US-A- 4 383 839
- US-A- 4 442 217
- US-A- 4 805 441
- US-A- 4 962 042
- TRAC, TRENDS IN ANALYTICAL CHEMISTRY, vol. 8, no. 5, June 1989, CAMBRIDGE, GB, pp. 162-166, GROB
- JOURNAL OF HIGH RESOLUTION CHROMATOGRAPHY AND CHROMATOGRAPHY vol. 11, no. 1, January 1988, HEIDELBERG, DE, pp. 16-20, BUSKHE ET AL.

## Description

Gas Chromatography (GC) is an important chemical analysis method. The introduction of capillary columns for GC represented a major advancement because capillary columns separated the components of interest with better resolution and sensitivity. Capillary GC was further advanced by the introduction of a retention gap. A retention gap is a section of capillary tubing connected to the inlet end of the analytical column, the capillary tubing of the retention gap usually being deactivated but uncoated with a stationary phase. An authoritative text on this subject is Grob, "On-Column Injection in Capillary Gas Chromatography", Huethig, New York, 1987. The use of a retention gap has become a preferred means for injecting considerably larger volumes of sample into a capillary gas chromatograph than previously thought possible, thereby resulting in a further improvement in the sensitivity of analysis.

The practice of large volume on-column injection using a retention gap involves introducing a large volume of sample comprising a solvent and a number of components of interest into the retention gap. During the time period when this injection is made, the temperature of the retention gap/analytical column combination is controlled, usually, to be near the boiling point of the solvent at atmospheric pressure. The solvent elutes first from the retention gap into the analytical column followed, hopefully, by the components of interest which form a concentrated band at the inlet of the analytical column. Then the temperature of the retention gap/analytical column combination is increased to chromatographically separate the components of interest in the analytical column.

Even though the use of a retention gap has enabled large sample volumes to be injected into a capillary GC system, certain classes of components of interest, namely those which are retained in the retention gap at temperatures near the boiling point of the solvent are still difficult to determine by this technique. These retained components do not concentrate at the inlet of the analytical column at temperatures close to the boiling point of the solvent but instead, tend to remain spread along the wall of the retention gap. Upon increasing the temperature of the retention gap/analytical column combination these retained components finally emerge from the retention gap and enter the analytical column. However, the peaks corresponding to these retained components are often broad and poorly shaped. A method and apparatus that would overcome this problem would be an advance in the art of retention gap GC.

US-A 4 383 839 discloses a device for vaporization injection of a sample in a gas chromatographic column housed in an oven in which an uncoated capillary column length is provided between injection means and the gas chromatographic column, the capillary column length and the gas chromatographic column being in separate ovens.

The present invention is a method and apparatus which, to a substantial degree, solves the above mentioned problems. In particular, the present invention is a gas chromatograph suitable for large volume on-column injection comprising a means for sample injection, a retention gap, an analytical column and a detector, each communicating in series, said retention gap and said analytical column being in a gas chromatography oven, characterized in that said retention gap and said analytical column are in the same oven and that a wire is wrapped upon the retention gap for separately controlling the temperature of said retention gap.

The present invention is also a gas chromatographic method comprising the steps of : (a) flowing a stream of carrier gaz through a retention gap and then through an analytical column ; (b) introducing a sample into the retention gap, characterized by (c) controlling the temperature of the analytical column by means of a gas chromatography oven in which analytical column is contained, and (d) separately controlling the temperature of the retention gap by means of a wire wrapped up said retention gap, said retention gap and said analytical column being contained in same oven.
Fig. 1 shows a preferred apparatus embodiment of the present invention;
Fig. 2A is a chromatogram of a mixture comprising about 440 ppb pentachlorophenol in hexane made using the present invention; and
Fig. 2B is a chromatogram of a mixture comprising about 440 ppb pentachlorophenol in hexane made using the prior art.

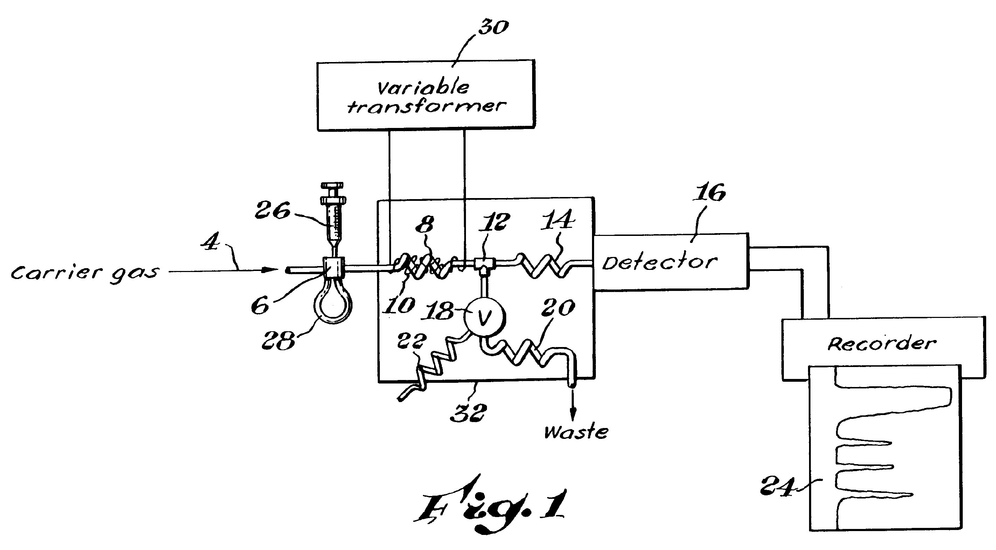

Referring now to Fig. 1, therein is shown a drawing of a preferred apparatus embodiment of the present invention. The apparatus includes a supply of carrier gas 4 such as helium. The carrier gas 4 is flowed through a loop-type injection valve 6, a retention gap 8, a three-way union 12, an analytical column 14, and into a detector 16. The three-way union 12, while preferred, is not an essential element of the invention, and a simple connecting union or other means can be used. An electrically resistive wire 10 surrounds the exterior surface of the retention gap 8. The three-way union 12 is connected also to a two-way divert valve 18. The two-way divert valve 18 is also connected to a vent restrictor 20 and a bleed restrictor 22. The retention gap 8, three-way union 12, analytical column 14, two-way divert valve 18, vent restrictor 20 and bleed restrictor 22 are all contained in a GC oven 32. A recorder 24 is connected to the detector 16 for recording chromatograms. A variable transformer 30 supplies power to the resistive wire 10.

While the present invention is suitable for all gas chromatographable components of interest, the detectability of polar components of interest such as alcohols and phenols and high molecular weight non-polar components of interest with boiling points not less than 100°C higher than the boiling point of the solvent at atmospheric pressure, such as di-n-octyl phthalate, is particularly enhanced.

It is true that the detectability of these relatively polar or non-volatile components of interest could be enhanced by merely concentrating the sample by pre-evaporation followed by injection of the concentrated sample into a conventional capillary column GC instead of injecting a large volume of sample into a retention gap GC. However, pre-evaporation can require tedious labor, which in turn increases the possibility of exposure of sample to the analyst, and can result in the loss of volatile components which the sample may comprise. On the other hand, sample preparation is greatly facilitated using the method of the present invention, and the increased sensitivity of the response attained for the polar or non-volatile components of interest do not adversely affect the response of the volatile components of interest. Thus, the greatest utility of the separately heated retention gap of the present invention is appreciated when the sample comprises a mixture of volatile and polar or non-volatile components of interest.

The choice of the sample solvent is not critical but volatile solvents of low to medium polarity such as hexane, acetone, diethyl ether, and methylene chloride are most commonly used. However, even polar solvents such as ethanol and water can be used.

An electrically resistive wire is the means for separately heating the retention gap.

The retention gap can also serve as an interface between the analytical column and a liquid chromatograph system. The teaching of an LC-GC interface which allow the introduction of large sample volumes onto a capillary column is described by Noy et al., HRC & CC, 11 (1988), 181-186 and Cortes et al., J. Microcolumn Separations, 1 (1989), 28-34. The term retention gap here and in the claims means: (1) a plain, i.e., non-deactivated, capillary tube; (2) a deactivated capillary tube; or (3) a capillary tube coated with a stationary phase. When the retention gap is coated with a stationary phase, i.e., when the retention gap comprises a conventional GC capillary analytical column, then a crosslinked stationary phase is preferred because a crosslinked stationary phase is more resistent to the sample solvent.

Referring again to Fig. 1, a syringe 26 is used to fill the sample loop 28 with a sample. The volume of the sample loop 28 is preferably at least 10 microliters and can range upward to 100 microliters, 500 microliters, or even one milliliter or more. Of course, a relatively larger injection volume generally requires a relatively larger volume retention gap. When the valve 6 is actuated the sample in the loop 28 is injected into the retention gap 8 by the flow of the carrier gas 4. The solvent evaporates into the carrier gas in the retention gap 8 and is then carried into the analytical column 14 followed by the volatile components of interest of the sample which are believed to form a concentrated band at the inlet of the analytical column. However, in the preferred mode of the method of the invention, the carrier gas flow, when the evaporated solvent is emerging from the retention gap 8, is at least partially diverted to waste by the valve 18 through the vent restrictor 20 at a rate which is about 10-50 times and most preferably about 30 times greater than the rate at which carrier gas passes through the analytical column 14 so that a large portion of the evaporated solvent is diverted to waste outside the oven 32. The reason for diverting this flow is to avoid overloading the detector with the evaporated solvent. An additional benefit of this diversion is that acomponents of interest are better resolved in the resultant chromatogram. The timing of the diversion is determined by trial and error and corresponds to approximately the largest amount of evaporated solvent that can be diverted to waste which does not result in the diversion to waste of substantial amounts of any volatile component of interest.

After the desired amount of solvent is diverted to waste, the valve 18 is switched to allow carrier 4 to also pass through the bleed restrictor 22 at a relatively low rate, e.g., a rate of one-fiftieth the rate at which the carrier 4 flows through the analytical column 14.

Concurrent with the switching of valve 18 so that the carrier gas flows through the restrictor 22 and the analytical column 14, the resistive wire 10 surrounding the retention gap 8 is heated rapidly by the variable transformer 26. The temperature of the retention gap 8 is raised most preferably from about the temperature of the boiling point of the solvent at atmospheric pressure up to between about 150°C-270°C. The initial temperature of the retention gap 8 is not critical and final temperatures above 270°C may be employed provided no detrimental effects such as decomposition of the sample or of the retention gap occur. The analytical column 14 is then heated by the oven 32 from about the temperature of the boiling point of the solvent at atmospheric pressure to a designated temperature (typically about 200°C-350°C) for a period of time necessary to elute the components of interest through the analytical column 14 with the desired result.

Separately controlling the temperature of the retention gap and the analytical column in this way is believed to drive the retained components of interest from the relatively hot retention gap 8 into the cooler analytical column 14 where these components then are believed to concentrate prior to the subsequent heating of the analytical column. As will be shown in the examples below, the separate heating of the retention gap results in a significant improvement in the chromatography of one of the components of interest. An added benefit of separately heating the retention gap is that its lifetime is often increased substantially because the sorptive effect of residues from previous injections can be overcome.

The system shown in Fig. 1 is assembled. The head pressure of the helium carrier gas 4 is 0.9 kilograms per square centimeter. A Valco six port (#ATC6WP) pneumatically actuated loop injection valve 6 is attached to a Hewlett Packard 5890 gas chromatograph having a flame ionization detector 16. The valve 6 is fitted with a 100 microliter loop 28. The retention gap 8 is a 10 meter long x 0.53 millimeter internal diameter fused capillary tube (Restek #10032). The analytical column 14 is a 30 meter long x 0.32 millimeter internal diameter Restek RTX-5, 1 micrometer thick film coating of stationary phase, fused silica capillary column (Restek #10254). The retention gap 8 is first wrapped with glass fiber tape, then it is wrapped with Chromel A 24 gauge electrically resistive wire (Hosking MFG CO. #155402D) and then it is again wrapped with glass fiber tape. A variable transformer 30 is used to supply electricity to the resistive wire 10 wrapped around the retention gap 8. The retention gap 8 is connected to the analytical column 14 using a Hewlett Packard Press Fit brand (#5041-2172) Y fitting 12. The divert valve 18 is a Valco 4-port (#A6N4WT) pneumatically actuated valve. The vent restrictor 20 is a one half meter long fused silica capillary tube 0.53 millimeters internal diameter. The bleed restrictor 22 is a nine centimeter long fused silica capillary tube 0.025 millimeters internal diameter.

The temperature of the injector, through which the inlet end of the retention gap 8 is routed, is set at 100° C and the detector 16 is set at 250°C. The temperature of the oven 32 is initially set at 65° C. The sample contains an unknown amount of m-dichlorobenzene, 1,3,5-trichlorobenzene, 2,6-dichlorophenol, 2,4,6-trichlorophenol and about 440 parts per billion (ppb, i.e., 440 micrograms per kilogram) of pentachlorophenol. At the time of sample injection, the helium 4 flows concurrently through the vent restrictor 20 into waste and the analytical column 14. The flow of helium 4 is 16.5 milliliters per minute through the vent restrictor 20 and 0.6 milliliters per minute through the analytical column 14.

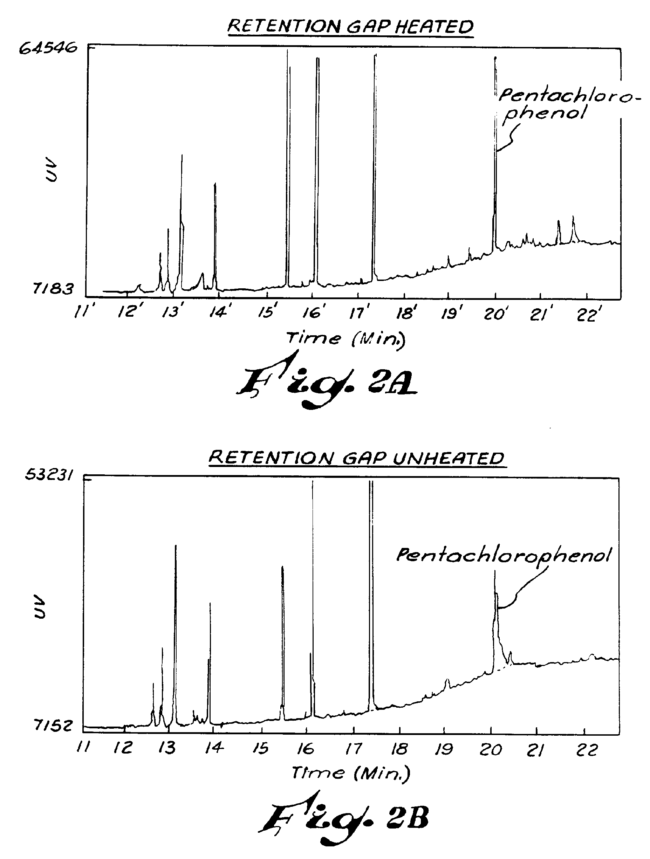

About 1.3 minutes after the valve 6 is actuated to inject the sample, the divert valve 18 is switched so that the helium 4 is flowing concurrently through the bleed restrictor 22 and the analytical column 14. The flow of helium 4 is 0.04 milliliters per minute through the bleed restrictor 22 and 1.6 milliliters per minute through the analytical column 14. Concurrent with this switching of the divert valve 18, the resistive wire 10 surrounding the retention gap 8 is heated by the variable transformer 30. The temperature of the retention gap 8 is raised from 65°C to 170°C in 2 minutes and is maintained at 175°C for an additional 6 minutes. The temperature of the oven 32 is programmed to stay at 65°C for the first 7 minutes of the chromatographic run and then to increase at a rate of 10°C per minute until a final temperature of 250°C is reached. The increase of the oven temperature further increases the temperature of the retention gap 8 and when it reaches 250°C the variable transformer 30 is turned off. The resultant chromatogram is shown in Fig. 2A.

The glass fiber tape and resistive wire 8 is removed from the retention gap 8 so that the retention gap 8 is bare. The above analysis is then repeated and the chromatogram shown in Fig. 2B results. A comparison of Fig. 2A and Fig. 2B shows the superiority of the chromatogram made using the present method and apparatus especially for the pentachlorophenol peak.

## Claims

1. A gas chromatograph suitable for large volume on-column injection comprising a means (26, 6, 28) for sample injection, a retention gap (8), an analytical column (14) and a detector (16), each communicating in series, said retention gap (8) and said analytical column (14) being in a gas chromatography oven, characterized in that said retention gap (8) and said analytical column (14) are in the same oven (12) and that a wire (10) is wrapped upon the retention gap (8) for separately controlling the temperature of said retention gap (8).

2. A gas chromatographic method comprising the steps of :
(a) flowing a stream of carrier gas (4) through a retention gap (8) and then through an analytical column (14) ;
(b) introducing a sample into the retention gap (8) ;
characterized by
(c) controlling the temperature of the analytical column by means of a gas chromatography oven in which analytical column is contained,
(d) separately controlling the temperature of the retention gap (8) by means of a wire wrapped up said retention gap, said retention gap and said analytical column being contained in same oven (12).

## Patentansprüche

1. Gaschromatograph, welcher für Säuleneinspritzung großer Volumina geeignet ist, umfassend ein Mittel (26, 6, 28) zur Probeneinspritzung, eine Rückhalteschleife (8), eine Analysesäule (14) und einen Detektor (16), die jeweils in Reihe in Verbindung stehen, wobei die Rückhalteschleife (8) und die Analysesäule (14) in einem Gaschromatographieofen vorhanden sind,
dadurch gekennzeichnet,
daß die Rückhalteschleife (8) und die Analysesäule (14) im gleichen Ofen (12) sind und daß ein Draht (10) um die Rückhalteschleife (8) gewickelt ist, um die Temperatur der Rückhalteschleife (8) separat zu steuern.

2. Gaschromatographieverfahren, umfassend die Schritte:
(a) Leiten eines Trägergasstroms (4) durch eine Rückhalteschleife (8) und dann durch eine Analysesäule (14);
(b) Einbringen einer Probe in die Rückhalteschleife (8),
gekennzeichnet durch
(c) Steuern der Temperatur der Analysesäule mittels eines Gaschromatographieofens, in dem die Analysesäule enthalten ist;
(d) separates Steuern der Temperatur der Rückhalteschleife (8) mittels eines um die Rückhalteschleife gewickelten Drahtes, wobei die Rückhalteschleife und die Analysesäule im gleichen Ofen (12) enthalten sind.

## Revendications

1. Disposiif de chromatographie en phase gazeuse convenant pour injection sur colonne de grand volume, comprenant un moyen (26, 6, 28) pour l'injection d'échantillons, un espace de rétension (8), une colonne analytique (14) et un détecteur (16) communiquant, chacun, en série, ledit espace de rétension (8) et ladite colonne analytique (14) se trouvant dans un four de chromatographie en phase gazeuse, caractérisé par le fait que ledit espace de rétension (8) et ladite colonne analytique (14) se trouvent dans le même four (12) et qu'un conducteur (10) est enroulé autour de l'espace de rétension (8), pour contrôler séparément la température dudit espace de rétension (8).

2. Procédé de chromatographie en phase gazeuse, comprenant les étapes consistant à :
(a) faire circuler un courant de gaz porteur (4) à travers un espace de rétension (8) et ensuite à travers une colonne analytique (14) ;
(b) introduire un échantillon dans l'espace de rétension (8) ;
caractérisé par:
(c) le contrôle de la température de la colonne analytique à l'aide d'un four de chromatographie en phase gazeuse dans lequel est contenue la colonne analytique,
(d) le contrôle séparé de la température de l'espace de rétension (8) à l'aide d'un conducteur enroulé autour dudit espace de rétension, ledit espace de rétension et ladite colonne analytique étant contenus dans le même four (12).
